# FASCICULE DE BREVET EUROPEEN

(11) **EP 1 184 118 B1**
(45) Date de publication et mention de la délivrance du brevet: **15.12.2004**
(21) Numéro de dépôt: 01402258.6
(22) Date de dépôt: 30.08.2001
(51) Int. Cl.: B23D 43/02

(54) **Broche pour usiner des cannelures intérieures de précision**
Räumnadel zur Bearbeitung von inneren Hochpräzisionsnuten
Broach for working internal grooves

(30) Priorité: 31.08.2000 FR 0011102
(43) Date de publication de la demande: 06.03.2002
(73) Titulaire: Hispano Suiza, 92700 Colombes (FR)
(72) Inventeur: Heyraud, Georges, 92500 Rueil Malmaison (FR)
(74) Mandataire: Nguyen, Dominique

(56) Documents cités:
- GB-A- 332 168
- US-A- 5 224 804
- CLAUDE BELLAIS: 'Outils coupants Brochage' TECHNIQUES DE L'INGENIEUR vol. B, no. 7087, FRANCE, pages 1 - 19

## Description

L'invention se rapporte aux outils d'usinage par enlèvement de matière et plus particulièrement aux broches pour effectuer l'usinage de cannelures intérieures.

Le Fascicule B 7087 intitulé "Outils coupants Brochage" extrait des "techniques de l'Ingénieur" décrit une telle broche du chapitre 2.52 illustré par les Figures 10a et 10b, ayant les caractéristiques du préambule de la revendication 1.

Les broches pour usiner les cannelures intérieures sont des outils bien connus. Réalisées en matériau pour outil coupant, par exemple en carbure de tungstène, elles comportent successivement de l'avant vers l'arrière un guide d'entrée cylindrique de diamètre D1 suivi d'une section coupante constituée d'une pluralité de dents coupantes dont le diamètre augmente progressivement à partir du diamètre D1 du guide d'entrée. Les dents comportent elles-mêmes des échancrures afin de reproduire le profil des cannelures intérieures à usiner. La pièce à usiner est préalablement percée, dans l'axe des cannelures à usiner, d'un alésage de référence de diamètre D1 augmenté d'un jeu fonctionnel E permettant le coulissement du guide d'entrée dans l'alésage de référence. Cet alésage de référence constitue la référence par rapport à laquelle les cannelures à usiner doivent être centrées. Les cannelure sont usinées par le passage de la broche dans l'alésage de référence par un mouvement d'arrière vers l'avant. La broche est au début centrée dans l'alésage de référence par le guide d'entrée. Toutefois, lorsque le guide d'entrée est ressorti de l'alésage de référence, la broche est susceptible de dévier radialement au fur et à mesure de l'usinage des cannelures, de sorte que les cannelures usinées ne sont plus exactement centrées sur l'alésage de référence.

Pour remédier à cela, il est connu de disposer derrière les dents pour usiner les cannelures deux ou trois étages de dents sans échancrures permettant de retoucher l'alésage de référence et de le recentrer par rapport aux cannelures terminées. L'inconvénient d'une telle solution est qu'elle ne permet pas de centrer rigoureusement les cannelures usinées par rapport à l'alésage de référence préalablement usiné dans la pièce.

On connaît par le brevet US 5,224,804 une broche pour aléser les supports de paliers du vilebrequin sur un moteur à explosion, cette broche comportant une succession de tronçons coupants de diamètres croissants depuis l'avant vers l'arrière, ces tronçons coupants étant séparés par des "segments pilotes" au diamètre des tronçons coupants les précédant. Une telle broche permet d'améliorer la concentricité des supports de palier entre eux mais elle ne peut assurer un positionnent rigoureux dans l'espace de ces supports de palier car les dérives aléatoires, provenant du jeu nécessaire laissés entre les segments pilotes et les alésages réalisés par les tronçons coupants précédents, se cumulent. Ainsi, plus la quantité de matière enlevée par le brochage est importante, plus il faut de tronçons coupants et plus la dérive résultante est importante. Ce jeu nécessaire n'est pas négligeable pour deux raisons :
1. Il doit toujours exister afin que les segments pilotes puissent coulisser sans forcer dans les alésages,
2. il doit être important afin que ce jeu soit encore effectif lorsque les arêtes coupantes de la broche commencent à s'user.

L'invention propose une broche pour cannelures intérieures selon la revendication indépendante 1 permettant un centrage rigoureux des cannelures usinées par rapport à l'alésage de référence. Une telle broche est remarquable en ce que la section coupante est subdivisée de l'avant vers l'arrière par une pluralité de tronçons coupants séparés les uns des autres par des guides de recentrage cylindriques de même diamètre D1 que le guide d'entrée. En d'autres termes, deux tronçons coupants contigus sont séparés l'un de l'autre par au moins un guide de recentrage et de préférence par un seul. Les guides de recentrage permettent de recentrer la broche sur l'alésage de référence pendant l'usinage des cannelures et d'assurer ainsi un centrage rigoureux des cannelures usinées par rapport à l'alésage de référence.

Les revendications dépendantes décrivent des réalisations avantageuses de l'invention.

La broche de l'invention ne saurait être assimilée à celle qui est divulguée par le brevet US 5,224,804. Selon l'invention en effet, les guides de recentrage coulissent sur l'alésage de référence pendant l'opération de brochage. De ce fait, la dérive est au plus égale au jeu nécessaire laissé entre l'alésage de référence et les guide de recentrage. Il n'y a donc pas de cumul de dérives comme dans le brevet cité et le positionnement dans l'espace des surfaces brochées, en l'occurrence les cannelures, est bien meilleur.

L'invention sera mieux comprise et les avantages qu'elle procure apparaîtront plus clairement au vu d'un exemple détaillé de réalisation de la broche et des figures annexées.
La figure 1 illustre une broche selon l'invention.
La figure 2 illustre par une vue en coupe la broche de la figure 1.

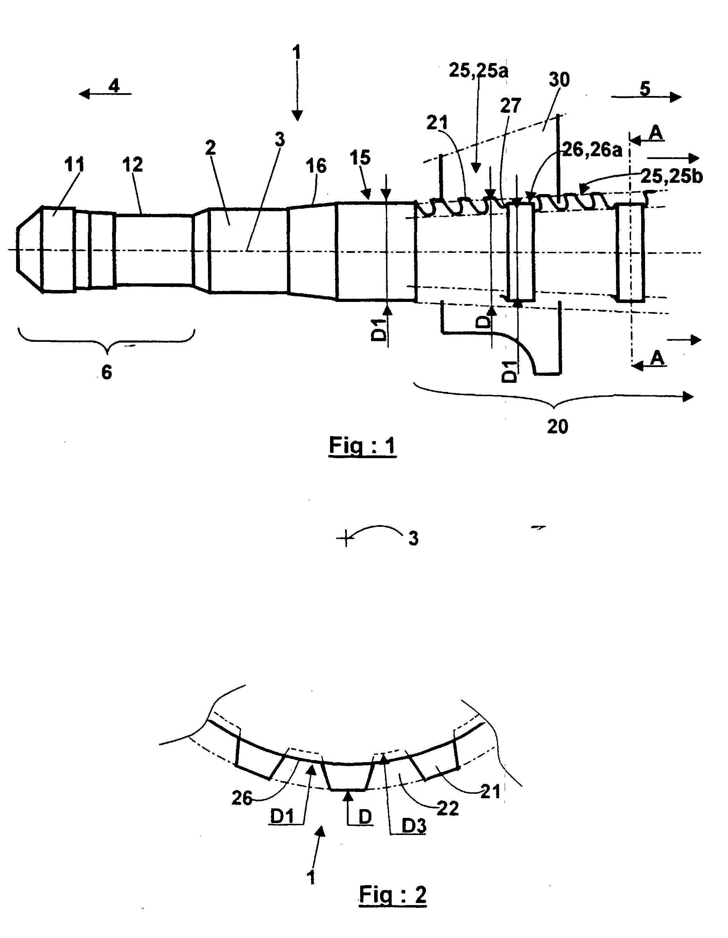

On va d'abord décrire une broche classique et on se reportera en premier lieu à la figure 1. La broche 1 est constituée d'une tige 2 droite d'axe géométrique 3. La broche 1 est en matériau pour outil coupant, par exemple en carbure de tungstène. On définira l'avant 4 et l'arrière 5 de la broche 1. La broche 1 comporte à l'avant 4 des moyens d'accrochage 10 permettant de saisir et de tirer la broche 1 de l'arrière 5 vers l'avant 4. Ces moyens d'accrochage 10 comportent de l'avant 4 vers l'arrière 5 un bulbe 11 et d'une gorge 12 permettant de saisir la broche 1 par le bulbe 11 à l'aide d'une pince non représentée. La broche 1 comporte ensuite vers l'arrière 4 un guide d'entrée 15 précédé d'un chanfrein 16, le guide d'entrée 15 étant cylindrique de diamètre D1 centré sur l'axe géométrique 3. Le guide d'entrée 15 est immédiatement suivi vers l'arrière 5 d'une section coupante 20 constituée d'une pluralité de dents 21 coupantes vers l'avant 4 dont le diamètre D augmente progressivement de l'avant 4 vers l'arrière 5 depuis une valeur égale au diamètre D1 du guide d'entrée (15) jusqu'à un diamètre D2 non représenté correspondant au diamètre extérieur des cannelures à usiner.

On se reportera provisoirement à la figure 2. Les dents 21 sont latéralement séparées par des échancrures 22 pénétrant radialement dans la broche 1 vers l'axe géométrique 3 jusqu'à un diamètre D3 au plus égal au diamètre D1 du guide d'entrée 15 et de préférence inférieur à lui. Par le terme "latéralement", on entend suivant la circonférence de la broche 1 passant par les dents 21. On comprend que les flancs des échancrures 22 ont une forme complémentaire aux flancs des cannelures non représentées à usiner. Les dents 21 peuvent être disposées suivant des circonférences de la broche 1. Le plus souvent, elles sont disposées suivant une hélice unique afin d'assurer un effort de coupe constant.

On se reportera de nouveau à la figure 1. Selon l'invention, la section coupante 20 est divisée de l'avant 4 vers l'arrière 5 en une pluralité de tronçons coupants 25 séparés deux à deux par un guide de recentrage 26. Les tronçons coupants 25 sont évidemment constitués par les dents 21 précédemment définies. Les guides de recentrage 25 sont cylindriques de diamètre égal au diamètre D1 du guide d'entrée, ces guides de recentrage étant centrés également sur l'axe géométrique 3. Les guides de recentrage 26 comportent chacun à l'avant 4 chacun un chanfrein 27.

Le fonctionnement de la broche 1 est le suivant : La pièce à usiner 30 est préalablement percée d'un alésage non référencé de diamètre D1 augmenté d'un jeu fonctionnel E permettant le coulissement du guide d'entrée 15 et des guides de recentrage 26. La broche est introduite dans l'alésage de référence de la pièce 30 et tirée de l'arrière 5 vers l'avant 4. Le guide d'entrée 15 pénètre en premier dans la pièce 30 et assure le centrage de la broche 1. Pendant que les dents 21 du premier tronçon coupant 25a pénètrent dans la pièce 30 et commencent l'usinage des cannelures, le guide d'entrée 15 ressort de la pièce 30 et ne peut plus assurer le centrage de la broche 1. De ce fait, les dents 21 sont alors susceptibles de dévier radialement, mais cette déviation est arrêtée très tôt par l'arrivée du premier guide de recentrage 26a qui recentre alors la broche 1 sur l'alésage de référence préalablement percé dans la pièce 30. Le premier guide de recentrage 26a assure successivement le centrage des dents 21 du premier tronçon coupant 25 puis du second tronçon coupant 25b, et ainsi de suite au fur et à mesure de l'avancement de la broche 1 dans la pièce 30. On comprend que les chanfreins 27 ramènent en cas de déviation les guides de recentrage 26 en face de l'alésage de référence et facilitent ainsi la pénétration des guides de recentrage 26 dans l'alésage de référence. La longueur des guides de recentrages 26 n'est pas critique. Elle sera de préférence au moins égale au quart du diamètre D1 afin de mieux répartir les pressions exercées par les guides de recentrage 26 sur l'alésage de référence.

Afin de ne pas augmenter excessivement la longueur de la broche 1, chaque tronçon coupant 25 comportera axialement, c'est à dire de l'avant 4 vers l'arrière 5, au moins trois dents 21. D'une manière générale, il est toutefois préférable de ne pas avoir plus de six dents 21 par tronçon coupant 25 afin de ne pas laisser se développer une déviation trop forte de la broche 1 qui ne pourrait pas être rattrapée par le guide de recentrage 26 suivant sans développer un effort excessif risquant de provoquer la rupture de la broche 1 ou de la pièce 30.

L'invention ne saurait être limitée à l'exemple de réalisation qui vient d'en être donné, mais elle en couvre également toutes les variantes supportées par les revendications.

La broche aura le plus souvent un profil circulaire centré sur l'axe géométrique 3, mais l'invention est applicable également à des profils non circulaires. Dans tous les cas, la section des guides de recentrage 26 sera identique à celle du guide d'entrée 15.

Les moyens d'accrochage 6 sont le plus souvent à l'avant 4 de la broche 1, mais l'invention peut également être appliquée à une broche comportant des moyens d'accrochage à l'arrière 5 ou combinés à l'avant 4 et à l'arrière 5, ces deux dernières configurations permettant de supprimer ou de réduire l'effort de traction imposé à la broche 1.

La section coupante 20 peut aussi être complétée vers l'arrière 5 par quelques étages de dents non représentées, ces dents ne comportant pas d'échancrures et permettant la finition de l'alésage de référence après le passage et le frottement des guides de recentrage.

## Revendications

1. Broche pour usiner les cannelures intérieures de précision, la broche (1) ayant la forme générale d'une tige (2) droite d'axe géométrique (3) en matériau pour outil coupant, la broche (1) comportant des moyens d'accrochage (6) et successivement de l'avant (4) vers l'arrière (5) un guide d'entrée (15) suivi d'une section coupante (20), le guide d'entrée (15) étant cylindrique de diamètre D1 et centré sur l'axe géométrique (3), la section coupante (20) comportant une pluralité de dents (21) coupantes centrées sur l'axe géométrique (3) et tournées vers l'avant (4), les dents (21) ayant un diamètre extérieur D au moins égal à D1 et croissant progressivement de l'avant (4) vers l'arrière (5), les dents (21) étant latéralement séparées par des échancrures (22) pénétrant à l'intérieur de la broche (1) jusqu'à un diamètre D3 au plus égal au diamètre D1 du guide d'entrée (15), **caractérisée en ce que** la section coupante (20) est subdivisée de l'avant (4) vers l'arrière (5) en une pluralité de tronçons coupants (25) séparés les uns des autres par des guides de recentrage (26), les tronçons coupants (25) comportant les dents coupantes (21), les guides de recentrage (26) étant cylindriques, et ayant un diamètre égal au diamètre D1 du guide d'entrée (15).

2. Broche selon la revendication 1 **caractérisée en ce que** les guides de recentrage (26) comportent chacun à l'avant un chanfrein (27).

3. Broche selon la revendication 1 ou 2 **caractérisée en ce que** les tronçons coupants (25) comportent chacun axialement au moins trois dents (21).

4. Broche selon l'une des revendication 1 à 3 **caractérisée en ce que** les tronçons coupants (25) comportent chacun axialement au plus six dents (21).

## Claims

1. Broach for machining precision internal splines, the broach (1) having the overall form of a straight rod (2) of geometric axis (3) made of cutting tool material, the broach (1) comprising attachment means (6) and, in succession, from front (4) to rear (5), an inlet guide (15) followed by a cutting section (20), the inlet guide (15) being cylindrical of diameter D1 and centred on the geometric axis (3), the cutting section (20) comprising a number of cutting teeth (21) centred on the geometric axis (3) and facing forwards (4), the teeth (21) having an outside diameter D at least equal to D1 and increasing progressively from front (4) to rear (5), the teeth (21) being laterally separated by slots (22) penetrating into the broach (1) down to a diameter D3 at most equal to the diameter D1 of the inlet guide (15), **characterized in that** the cutting section (20) is subdivided from front (4) to rear (5) into a number of cutting portions (25) separated from one another by recentring guides (26), the cutting portions (25) comprising the cutting teeth (21), the recentring guides (26) being cylindrical and having a diameter equal to the diameter D1 of the inlet guide (15).

2. Broach according to Claim 1, **characterized in that** the recentring guides (26) each have a chamfer (27) of the front.

3. Broach according to Claim 1 or 2, **characterized in that** the cutting portions (25) each axially comprise at least three teeth (21).

4. Broach according to one of Claims 1 to 3, **characterized in that** the cutting portions (25) each axially comprise six teeth (21) at most.

## Patentansprüche

1. Räumnadel zur Bearbeitung von inneren Hochpräzisionsnuten, wobei die Räumnadel (1) die allgemeine Form eines geraden Stabes (2) mit der Geometrieachse (3) hat und aus einem Werkstoff für Schneidwerkzeuge besteht, wobei die Räumnadel (1) Befestigungsmittel (8) sowie von der Vorderseite (4) bis zur Rückseite (5) nacheinander eine Eintrittsführung (15), gefolgt von einem Schneidbereich (20) aufweist, wobei die Eintrittsführung (15) zylinderförmig mit einem Durchmesser D1 ausgeführt und auf der Geometrieachse (3) zentriert ist, wobei der Schneidbereich (20) eine Vielzahl von Schneidzähnen (21) aufweist, die auf der Geometrieachse (3) zentriert und zur Vorderseite (4) hin ausgerichtet sind, wobei die Zähne (21) einen Außendurchmesser D von mindestens gleich D1 aufweisen, der von der Vorderseite (4) zur Rückseite (5) hin ständig größer wird, wobei die Zähne (21) seitlich durch bogenförmige Ausschnitte (22) voneinander getrennt sind, die ins Innere der Räumnadel (1) bis zu einem Durchmesser D3 eindringen, welcher höchstens gleich dem Durchmesser D1 der Eintrittsführung (15) ist,
**dadurch gekennzeichnet,**
**dass** der Schneidbereich (20) von der Vorderseite (4) zur Rückseite (5) in eine Vielzahl von Schneidabschnitten (25) unterteilt ist, die voneinander durch Rückzentrier-Führungen (26) getrennt sind, wobei die Schneidabschnitte (25) die Schneidzähne (21) beinhalten, wobei die Rückzentrier-Führungen (26) zylinderförmig ausgeführt sind und einen Durchmesser haben, der gleich dem Durchmesser D1 der Eintrittsführung (15) ist.

2. Räumnadel nach Anspruch 1,
**dadurch gekennzeichnet,**
**dass** die Rückzentrier-Führungen (26) jeweils vom eine Abschrägung (27) aufweisen.

3. Räumnadel nach Anspruch 1 oder 2,
**dadurch gekennzeichnet,**
**dass** die Schneidabschnitte (25) jeweils in Achsrichtung mindestens drei Zähne (21) aufweisen.

4. Räumnadel nach einem der Ansprüche 1 bis 3,
**dadurch gekennzeichnet,**
**dass** die Schneidabschnitte (25) jeweils in Achsrichtung höchstens sechs Zähne (21) aufweisen.
